# EUROPÄISCHE PATENTSCHRIFT

(11) **EP 3 724 075 B1**
(45) Veröffentlichungstag und Bekanntmachung des Hinweises auf die Patenterteilung: **07.06.2023**
(21) Anmeldenummer: 18814529.6
(22) Anmeldetag: 28.11.2018
(51) Int. Cl.: B64D 9/00, B65D 88/14, B65D 90/22, B64C 1/20, B60P 1/00

(54) **FRACHTMANAGEMENTSYSTEM ZUM BE- UND ENTLADEN EINES FRACHTRAUMS EINES MOBILEN OBJEKTS MIT FRACHTGUT**
CARGO MANAGEMENT SYSTEM FOR LOADING AND UNLOADING CARGO INTO AND OUT OF A CARGO AREA OF A MOBILE OBJECT
SYSTÈME DE GESTION DE FRET SERVANT À CHARGER ET À DÉCHARGER UN ESPACE DE FRET D'UN OBJET MOBILE EN ARTICLES DE FRET

(30) Priorität: 15.12.2017 DE 102017130163
(43) Veröffentlichungstag der Anmeldung: 21.10.2020
(73) Patentinhaber: Turntime Technologies AB, 224 78 Lund (SE)
(72) Erfinder: CHRISTOFFERSSON, Örjan, 22478 Lund (SE)
(74) Vertreter: Kuhnen & Wacker Patent- und Rechtsanwaltsbüro PartG mbB
(86) Internationale Anmeldenummer: PCT/EP2018/082855
(87) Internationale Veröffentlichungsnummer: WO 2019/115232

(56) Entgegenhaltungen:
- EP-A1- 0 263 540
- EP-A1- 0 309 638
- EP-B1- 0 309 638
- WO-A1-91/07337
- DE-B3-102014 003 210
- DE-C1- 10 158 298
- US-A- 3 066 817
- US-A- 4 000 870
- US-A- 5 101 962
- US-A- 5 195 701
- US-A1- 2017 217 561

## Beschreibung

Die vorliegende Erfindung betrifft ein Frachtmanagementsystem zum Be- und Entladen eines Frachtraums eines mobilen Objekts mit Frachtgut in Form von Paletten, Containern und losem Stückgut wie Taschen, Koffern, Paketen und dergleichen nach Anspruch 1.

Die Anzahl der beförderten Personen in Nah- und Fernverkehr nimmt stetig zu. So stieg beispielsweise die Anzahl der Flugpassagiere allein aus Deutschland weltweit auf über 81 Millionen im Jahr 2014 an (Quelle Destatis, 2017). Ähnlich verhält es sich mit der Personenanzahl, die über andere Verkehrsmittel im Fernverkehr, beispielsweise per Bahn oder Schiff, befördert werden.

Mit der zunehmenden Anzahl an zu befördernden Personen steigt auch die Anzahl an zu befördernden Gepäckstücken der Passagiere. Um einen schnellen und reibungslosen Flugverkehr gewährleisten zu können, ergeben sich für das Gepäckmanagement folglich große Herausforderungen. Insbesondere muss sich das Gepäckmanagement dabei individuell an den jeweiligen Anforderungen des verwendeten Flugzeugtyps ausrichten.

Hierbei wird zwischen zwei Hauptklassen von Flugzeugtypen unterschieden.

Dies sind auf der einen Seite sogenannte Großraum- oder Widebody-Flugzeuge wie die Boeing 747, die Boeing 767, der Airbus A340 oder der Airbus A380. Diese Art von Flugzeugen, die sind nur auf Strecken mit entsprechend hoher Passagierzahl wirtschaftlich einsetzbar sind, hat mehr als fünf Meter Rumpfdurchmesser und mindestens zwei Gänge in der Passagierkabine, die auch eine zweite Ebene aufweisen kann.

Demgegenüber gibt es die wesentlich kleineren, sogenannten Standardrumpf- oder Narrowbody-Flugzeuge, zu denen die Boeing 727, 737 und 757 oder die vier Modellreihen der Airbus A320-Familie gehören, die denselben standardisierten Rumpfdurchmesser besitzen. Diese kleineren Flugzeuge bieten aufgrund ihrer Bauform weniger Passagierkomfort durch die als beengt empfundene Kabine, deren Wände stark gebogen sind und das Gefühl einer Röhre erzeugen können, besonders bei Maschinen mit langem Rumpf.

Widebody-Flugzeuge sind dabei derart konzipiert, dass sie neben einem großen, mitunter mehrstöckigen Passagierraum einen großen Frachtraum aufweisen, in dem sogenannte ULDs (Unit Load Devices) aufgenommen werden können. ULDs sind Paletten und Container, die verwendet werden, um in Einheiten gebündeltes Gepäck, Frachtgut und Post auf Großraumflugzeuge und einige wenige Narrowbody-Flugzeuge zu laden, sofern diese über das erforderliche Transportsystem für Paletten und Flugzeugcontainer verfügen, das aus einer Kombination von Rollenplatten und entsprechenden Verriegelungsvorrichtungen im Frachtraum besteht, vermittels welcher die ULDs im Frachtraum positioniert und gegen Bewegung gesichert werden können. Ein derartiges Ladesystem ist beispielsweise in der DE 101 58 298 C1 offenbart.

ULDs sind hierbei zertifizierte Container, Paletten oder auch Netze, die bestimmten Kräften (z.B. eine nach oben wirkende Kraft von 9826 lbs oder rund 4457 kg bei einem an 4 Stellen an der Bodenplatte gesicherten LD3-Container über eine Zeitspanne von 3 Sekunden) standhalten müssen. Die weltweit am häufigsten genutzten Zertifizierungsstandards sind dabei der Technical Standards Order (TSO) C90c der FAA oder der ETSO C90c der EASA, obgleich Länder wie China oder Australien ergänzende Standards zur Zertifizierung von ULDs haben.

Diese von der FAA oder der EASA zertifizierten Container sind geschlossene Behälter aus Aluminiumblechen mit Profilrahmen oder einer Kombination aus Aluminium (Rahmen) und Kunststoff (Wände) und können, je nach Art der darin befindlichen Güter, auch eingebaute Kühlaggregate haben. Dazu sind auch diese ULD-Container häufig innen mit Ösen ausgestattet, um schwere Frachtstücke und Gefahrgutsendungen fixieren zu können.

Obgleich die Benutzung von ULDs dazu führt, dass weniger Einheiten geladen werden müssen, und Abfertigungsunternehmen Bodenpersonal, Zeit und Aufwand sparen, da die ULDs zügig in und aus dem Frachtraum befördert werden können, ist die Verwendung dieser ULDs nicht bei allen Narrowbody-Flugzeugen möglich.

Die Boeing 737 ist beispielsweise ein Narrowbody-Flugzeug, dessen Laderäume nicht dafür ausgelegt sind, um ULDs zu transportieren. Insbesondere hat dieser Flugzeugtyp keine Zulassung für das erforderliche Transportsystem für Paletten und Flugzeugcontainer mit den entsprechenden Verriegelungsvorrichtungen im Frachtraum, vermittels welcher die ULDs gegen Bewegung gesichert werden könnten.

Somit ist es bei den meisten Narrowbody-Flugzeugen aufgrund der fehlenden Positionier- und Sicherungsmöglichkeiten für ULDs notwendig, das Be- und Entladen manuell durchzuführen, indem Bodenpersonal das Gepäck der Reisenden etc., Stück für Stück von Vorfeldfahrzeugen über ein Förderband zur Frachtraumöffnung fördert und dort entgegennimmt, wie dies beispielsweise auch in der EP 0 263 540 A1 offenbart ist. Im relativ niedrigen Frachtraum übernimmt Bodenpersonal dann bei weniger als 1,30 Meter Höhe das Gepäck, das von dem am Frachtraumeingang befindlichen Mitarbeiter über den Fachtraumboden geschoben wird, und ordnet das Gepäck unter beengten Verhältnissen im Frachtraum an.

Dies ist mit einem erheblichen Aufwand an Bodenpersonal und Zeit verbunden und bedingt, aufgrund der überwiegend knienden, ungünstigen Arbeitsbedingungen, eine gesundheitliche Belastung des Bodenpersonals, die mitunter zu hohen Ausfallzeiten führen kann, wodurch die Be- und Entladezeiten zusätzlich verlängert werden können.

Darüber hinaus bedeuten hohe Standzeiten für das Be- und Entladen verlorene Zeit, in der das Flugunternehmen keinen Umsatz generieren kann. Aus der US 4 000 870 A ist schließlich ein System bekannt, mit dem der Passagierraum eines Flugzeugs unter Verwendung von Frachtmodulen in einen Laderaum umgewandelt werden kann.

Ausgehend vom Stand der Technik liegt vorliegenden Erfindung die Aufgabe zugrunde, eine Möglichkeit anzubieten, um insbesondere auch bei Narrowbody-Flugzeugen das Be- und Entladen von Frachtgut in Form von Paletten, Containern und losem Stückgut wie Taschen, Koffern, Paketen und dergleichen, zu beschleunigen und zu erleichtern, ohne dabei die Sicherheit des zu beladenden Transportmittels oder des damit beschäftigten Personals zu gefährden.

Diese Aufgabe wird gelöst mit dem Frachtmanagementsytem nach Anspruch 1.

So wird erfindungsgemäß ein Frachtmanagementsystem zum Be- und Entladen eines Frachtraums eines mobilen Objekts mit Frachtgut vorgeschlagen, wobei das Frachtgut in Form von Paletten, Containern und losem Stückgut wie Taschen, Koffern, Paketen und dergleichen vorliegt. Das lose Stückgut kann dabei insbesondere in Form von einzelnen Gepäckstücken oder gesammelt in einem containerartigen Behälter vorliegen. Das Frachtmanagementsystem zum Be- und Entladen eines Frachtraums eines mobilen Objekts mit Frachtgut weist auf:
Eine Fördereinrichtung, die außerhalb des Frachtraums angeordnet ist, und das Frachtgut in Richtung zu einem Eingangsbereich des Frachtraums des mobilen Objekts fördert; ein im Eingangsbereich des Frachtraums des mobilen Objekts angeordnetes Frachtübergabemodul, wobei das Frachtübergabemodul die zugeführte Fracht annimmt und weiter in den Frachtraum leitet, wobei die Fracht vor der Weiterleitung in den Frachtraum auf dem Frachtübergabemodul ausrichtbar ist; und zumindest eine Zwischenfördereinrichtung, die im Anschluss an das Frachtübergabemodul im Frachtraum angeordnet ist, zur Weiterförderung des Frachtguts im Frachtraum.

Hierbei umfasst das Frachtübergabemodul: eine Basiseinheit, die in dem Eingangsbereich eines Frachtraums anordenbar ist und die vier Randbereiche umfasst, die zwischen sich eine Transportfläche aufspannen, zumindest zwei Eingangselemente, die in einem ersten Randbereich der vier Randbereiche der Basiseinheit angeordnet sind und vermittels welcher die Fracht im Eingangsbereich des Frachtraums aufnehmbar und zur Basiseinheit weiterförderbar ist, zumindest zwei Ausgangselemente die in einem zweiten Randbereich der vier Randbereiche der Basiseinheit vorzugsweise um 90° zu dem ersten Randbereich versetzt, angeordnet sind und vermittels welcher die Fracht von der Basiseinheit weiter in den Frachtraum förderbar ist, eine Mehrzahl von Transporteinrichtungen, die über die Transportfläche an der Oberseite der Basiseinheit verteilt integral in dieser angeordnet sind und vermittels welcher die über die Eingangselemente zugeführte Fracht ausgerichtet und an die Ausgangselemente weitergeleitet werden kann, sowie Führungselemente, die in einem dritten und vierten Randbereich der vier Randbereiche der Basiseinheit angeordnet sind, um zu verhindern, dass die Fracht beim Zuführen auf die Transportfläche über die Transportfläche hinaus bewegt wird.

Das Frachtübergabemodul zeichnet sich dadurch aus, dass es in Leichtbauweise hergestellt ist und somit gegenüber herkömmlichen DWUs deutlich an Gewicht eingespart werden kann. Hierdurch ist es möglich, das Frachtübergabemodul dauerhaft an entsprechenden Halterungen oder Schienen im Eingangsbereich des Frachtraums zu installieren oder kurzfristig im Be- bzw. Entladungsfall über das Vorfeld an das Flugzeug heranzuführen, im Frachtraum "einzuklinken" und dann nach dem Be- bzw. Entladevorgang wieder wegzunehmen. Gerade diese Flexibilität, das Modul im Bedarfsfall schnell zu installieren, sozusagen per plug-and-play im Frachtraum anzuordnen und dann wieder wegzunehmen ist mit den herkömmlichen DWUs nicht möglich, das diese, wie eingangs erwähnt, entsprechend schwer ausgebildet sind.

Der containerartige Behälter hat: eine Tragstruktur mit einem Bodenteil sowie zwei daran angeordneten, einander gegenüberliegenden Seitenelementen, ein Hüllenelement, das derart mit der Tragstruktur verbindbar ist, dass die Tragstruktur und das damit verbundene Hüllenelement zwischen sich einen an zumindest fünf Seiten umschlossenen Raum definieren, zur Aufnahme des losen Stückguts darin, wobei die Tragstruktur und/oder das Hüllenelement derart ausgestaltet sind, dass die Tragstruktur und/oder das Hüllenelement bei Überschreiten eines im Voraus definierten Grenzwerts einer auf die Tragstruktur und/oder das Hüllenelement wirkenden Kraft, den von diesen umfassten Raum freigeben und damit eine relative Beweglichkeit des in dem Raum aufgenommenen Stückguts zueinander sowie zu dem containerartigen Behälter und einer diesen umgebenden Umgebung ermöglichen, die gleich der Beweglichkeit von Stückgut ist, das nicht in dem containerartigen Behälter aufgenommen ist.

Das erfindungsgemäße Frachtmanagementsystem umfasst somit eine Mehrzahl von kooperierenden Transporteinheiten bzw. Module, womit die Be- und Entladezeit verkürzt werden kann. Zudem ist ein containerartiger Behälter vorgesehen, mit dem das sonst als loses Stückgut vorliegende Gepäck gesammelt in den Frachtraum einbringbar ist. Durch die erfindungsgemäße Anordnung einer außerhalb des Frachtraums angeordneten Fördereinrichtung, die das Gepäck zum Frachtraum fördert, dort an ein Frachtübergabemodul übergibt, wo das Gepäck ausgerichtet und weiter in den Frachtraum hinein auf eine Zwischenfördereinrichtung gefördert wird ist es erstmals möglich, das Gepäck nahezu ohne Mitwirkung von Bodenpersonal, vorzugsweise zumindest teilweise automatisiert, in den Frachtraum zu laden und auf dem umgekehrten Wege wieder zu entladen. Insbesondere ist es erfindungsgemäß möglich, dass der gesamte Be- und Entladevorgang von außerhalb des Frachtraums gesteuert wird. Somit ist nur noch eine sehr geringe Anzahl von Arbeitern notwendig, die das Be- und Entladen überwachen und ggf. eingreifen können. Durch die Verwendung des containerartigen Behälters, in dem das sonst lose vorliegende Gepäck gesammelt aufgenommen ist, kann weiter Zeit gespart werden, da anstatt einer Vielzahl einzelner Gepäckstücke nur noch diese Behältnisse in den Frachtraum gebracht werden müssen.

Um dem Problem Rechnung zu tragen, dass die Verwendung von Containern insbesondere bei Narrowbody-Flugzeugen aufgrund der fehlenden Befestigungsmöglichkeiten bisher nicht möglich war, da die vorstehend bezeichneten Zertifizierungsstandards nicht erfüllt werden können, ist bei dem Frachtmanagementsystem eine Art Container vorgesehen, dessen partiell aufgebrachte Flächenlast unter einer zulässigen Gesamtbeladung, in vorbestimmten Belastungsszenarien des Flugbetriebs, eine lokal zugewiesene sicherheitsrelevante Maximalbelastung der flugzeugseitigen Konstruktion nicht überschreitet, also aufgrund seiner Eigenschaften nicht als Container im Sinne der vorstehend genannten Zertifizierungsstandards zu sehen ist und insbesondere auch in Narrowbody-Flugzeugen verwendet werden kann, die über kein Transportsystem für Paletten und Flugzeugcontainer verfügen, das mitunter entsprechende Verriegelungsmechanismen im Frachtraum umfasst, vermittels welcher derartige ULDs positioniert und gegen Bewegung gesichert werden können.

So kann mit dem erfindungsgemäßen Frachtmanagementsystem der containerartige Behälter beim Be- und Entladen ähnlich wie ULDs gehandhabt werden. Wenn jedoch ein im Voraus definierter Grenzwert einer auf die Tragstruktur und/oder das Hüllenelement des containerartigen Behälters wirkenden Kraft überschritten wird, beispielsweise wenn das Flugzeug in Turbulenzen gerät und plötzlich absackt, "bricht" der Container auseinander, wodurch das darin aufgenommene Gepäck freigegeben wird und sich im Frachtraum verteilen kann, so dass eine lokal zugewiesene sicherheitsrelevante Maximalbelastung der flugzeugseitigen Konstruktion nicht überschritten wird.

Das in dem Behälter verstaute Gepäck bewegt sich jedoch aufgrund der Massenträgheit weiter, wodurch eine Kraft auf die Tragstruktur und/oder das Hüllenelement aufgebracht wird, die in die ursprüngliche Bewegungsrichtung wirkt.

Diese Trägheitskraft wirkt dann, zusammen mit der beim abrupten Abbremsen des Behälters erzeugten, gegen die Trägheitskraft wirkenden Reaktionskraft auf den Behälter ein, wodurch eine Gesamtkraft auf den containerartigen Behälter aufgebracht wird. Wenn diese Gesamtkraft den im Voraus definierten Grenzwert für die maximal zulässige, auf die Tragstruktur und/oder das Hüllenelement wirkende Kraft überschreitet, "bricht" der Container auf, wodurch der von diesen umfasste Raum freigeben wird und damit eine relative Beweglichkeit des in dem Raum aufgenommenen Stückguts zueinander sowie zu dem Behälter und der diesen umgebenden Umgebung möglich wird.

In anderen Worten: das Gepäck "purzelt" dann frei durch den Frachtraum, als ob es nie in einem Behälter aufgenommen gewesen wäre, wodurch eine Beschädigung der Frachtraumstruktur zuverlässig verhindert werden kann.

Da es bei den meisten Flügen jedoch nicht zu derlei Szenarien kommt, verbleibt das Gepäck im containerartigen Behälter und kann dann, nach der Landung, in umgekehrter Weise zum vorstehend beschriebenen Beladevorgang entladen werden. Somit kann Zeit und Personal gespart werden, wodurch sich die Kosten für die Fluggesellschaften verringern.

Das erfindungsgemäße Frachtmanagementsystem erlaubt ein wesentlich leichteres Be- und Entladen, verbunden mit einer signifikanten Zeitersparnis und spürbar verringerten Belastung des involvierten Bodenpersonals, wodurch Standzeiten verringert und Ausfallzeiten reduziert werden können, was letztlich zu einer weiteren Kostenreduzierung führt.

Die außerhalb des Frachtraums angeordnete Fördereinrichtung kann ein Förderfahrzeug oder ein längenveränderliches Förderband sein. Somit kann das Gepäck rasch vom Lager- bzw. Aufgabeort, beispielsweise dem Check-In am Flughafen, zum Flugzeug verbracht werden. Beispielsweise kann das vorkonfektionierte Gepäck auf einem Gepäckfahrzeug zum Vorfeld gebracht werden, von wo es dann automatisch mittels eines Förderbandes auf dem Förderfahrzeug in den Frachtraum gefördert wird. In einer alternativen Ausführungsform kann ein längenveränderliches Förderband direkt vom Lager- bzw. Aufgabeort, beispielsweise dem Check-In am Flughafen, bis zum Flugzeug reichen und das Gepäck auf diesem Wege in den Frachtraum verbracht werden.

Die Eingangselemente im ersten Randbereich sowie die Ausgangselemente im zweiten Randbereich können rollen- oder walzenartig ausgebildet sein und die Transporteinrichtungen, die über die Transportfläche der Basiseinheit verteilt angeordnet sind, rollen- oder kugelartig ausgebildet sein. Zudem können an der Transportfläche weitere Transportmittel in Form von Schienen oder dergleichen angeordnet sind. Die Eingangselemente, die Ausgangselemente und/oder die Transporteinrichtungen können derart ausgestaltet sein, dass sie eine manuelle und/oder mit Motorkraft unterstützte, vorzugsweise automatische, Aufnahme, Ausrichtung und Weitergabe der Fracht ermöglichen.

Das Gepäck kann somit durch Bodenpersonal oder automatisch, aufgrund der kugellagerartigen Lagerung besonders einfach und nahezu widerstandsfrei ausgerichtet werden und dann weiter in den Frachtraum oder aus diesem an auf dem Vorfeld stehende Fahrzeuge übergeben werden. Hierdurch kann der Kraft- sowie Zeitaufwand spürbar verringert werden.

In der Transportfläche der Basiseinheit können zumindest zwei in unterschiedliche Richtungen weisende Antriebseinheiten, vorzugsweise um 90° zueinander versetzt, angeordnet sein, die rollen- oder walzenartige Förderelemente aufweisen, die von einem integral in der Basiseinheit angeordneten Motor antreibbar sind, wobei die Antriebseinheiten in der Transportfläche der Basiseinheit versenkt angeordnet sind und zur Weitergabe der Fracht mittels einer Hebeeinrichtung derart angehoben werden können, dass die Förderelemente aus der Transportfläche der Basiseinheit herausragen, um die Fracht durch Motorkraft von den Eingangselementen zu übernehmen, auf die Transportfläche der Basiseinheit weiter zu fördern und von dort, nach Ausrichtung der Fracht vermittels der Transporteinrichtungen, vorzugsweise beschleunigt, über die Ausgangselemente weiter in den Frachtraum, vorzugsweise an die dort angeordnete Zwischenfördereinrichtung, auszugeben.

Das Vorsehen zusätzlicher Antriebseinheiten, die im Ruhezustand in der Transportfläche versenkt und im Bedarfsfall aus selbiger angehoben werden, erlaubt eine unterstütze Weitergabe von Frachtgut in und aus dem Frachtraum. Dies ist insbesondere bei schweren und sperrigen Gegenständen vorteilhaft, da hierdurch nicht nur der Kraftaufwand des mit der Verladung beschäftigten Personals verringert wird, sondern gleichzeitig das Verletzungsrisiko gesenkt werden kann. Denn ohne eine derartige Unterstützung ist insbesondere bei sperrigen, schweren Gegenständen das Risiko, sich "das Kreuz zu verheben" relativ hoch. Durch die zusätzlichen Antriebseinheiten können somit auch Ausfallzeiten aufgrund von Krankheit/Verletzung verringert werden. Überdies erlaubt das beschleunigte Ausfahren der Fracht eine Minimierung der Abstände der zu ladenden Gegenstände im Frachtraum, wodurch ein ungewolltes Verrutschen der Fracht während des Starts oder bei Turbulenzen während des Fluges verringert werden kann.

Die in der Basiseinheit integral angeordneten Motoren sowie die Hebeeinrichtung können mittels einer Steuereinheit ansteuerbar sein, die integral in der Basiseinheit angeordnet ist und kabelgebunden und/oder kabellos mit einer im Frachtraum vorgesehenen Einrichtung in Verbindung bringbar ist.

Das Vorsehen einer Steuereinheit, die über ein Kabel oder drahtlos mit einer im Frachtraum vorgesehenen Einrichtung des Flugzeugs verbunden werden kann, erlaubt die kombinierte Steuerung nicht nur des Frachtübergabemoduls sondern auch der im Frachtraum vorhandenen Zwischenfördereinrichtung, wodurch die Zeit für Be- und Entladevorgänge verringert werden kann, das es nicht länger notwendig ist, die einzelnen Vorrichtungen separat zu steuern. Vielmehr ist es mit einer einzigen Steuereinheit möglich, eine Vielzahl von Modulen integral zu steuern. Indem die Verbindung des Frachtübergabemoduls vorzugsweise derart geschieht, dass eine Verbindung mit den flugzeuginternen Systemen im Frachtraum, z.B. einer Frachtbalance-Anzeige, der Stromversorgung, etc. hergestellt wird, ist es nicht nötig, separate Versorgungsleitungen etc. vorzusehen, über die das Frachtübergabemodul versorgt werden kann.

Zumindest eines der in dem dritten und vierten Randbereich der vier Randbereiche der Basiseinheit angeordneten Führungselemente weist Steuerelemente auf, die in Ausnehmungen angeordnet sind, die in dem Führungselement ausgebildet sind, und von einer Schutzwand geschützt sind, die von einem Teil des Führungselements gebildet ist, der den Transporteinrichtungen zugewandt ist, wobei vermittels der Steuerelemente die Steuereinheit bedient werden kann, um die Eingangs- und Ausgangselemente, die Transporteinrichtungen, die Antriebseinheiten sowie weitere, im Frachtraum vorhandene, Einrichtungen integral zu steuern.

Um die Steuereinheit möglichst leicht bedienen zu können, ist eines der Führungselemente derart ausgebildet, dass es Steuerelemente wie Bedienknöpfe, einen Joystick etc. umfasst, die integral darin ausgebildet sind. Um zu vermeiden, dass ein einzelner, im Eingangsbereich des Frachtraums stehender oder sitzender Bediener bei der Betätigung der Steuerelemente verletzt wird, beispielsweise weil er sich die Hand an auf die Transportfläche laufendem Gepäck einklemmt, sind die Steuerelemente hinter einem Teil der Führungsschiene angeordnet, der als Schutzwand dient. Diese hochintegrale Ausgestaltung erlaubt somit einerseits ein problemloses Steuern der Steuereinheit, während andererseits eine Verletzung des Bedieners bei der Bedienung verhindert werden kann.

Die Steuereinheit kann vermittels einer Kontrolleinheit ansteuerbar sein, die, vorzugsweise abnehmbar, im Frachtraum angeordnet ist, und/oder von einem Arbeiter mitgeführt wird, um Anweisungen kabelgebunden und/oder kabellos, vorzugsweise von außerhalb des Frachtraums, an die Steuereinheit zu geben.

Das Vorsehen einer abnehmbaren Kontrolleinheit zusätzlich oder alternativ zu den integral ausgebildeten Steuerelementen erlaubt eine weitere Vereinfachung der Be- und Entladung mit dem erfindungsgemäßen Frachtmanagementsystem.

So ist es insbesondere möglich, sowohl das Be- als auch das Entladen durchzuführen, ohne dass hierfür Personal im Bereich des Frachtraumeingangs knien muss. Vielmehr können mittels der Kontrolleinheit die jeweiligen Komponenten bzw. Module des Frachtmanagementsystems ferngesteuert werden, indem das Personal beispielsweise in der Nähe des Frachtraumeingangs auf dem Vorfeldfahrzeug steht, wenn die Kontrolleinheit über ein Kabel, beispielsweise ein Spiralkabel, mit dem Frachtübergabemodul und der Steuereinheit verbunden ist. Bei einer kabellosen Ausbildung der Kontrolleinheit kann das Personal sogar auf dem Vorfeld stehen, wodurch ein mögliches Verletzungsrisiko nahezu auf null verringert werden kann, da beispielsweise ein Herunterfallen vom Förderfahrzeug aufgrund einer unachtsamen Bewegung nicht möglich ist. Bei der Verwendung von standardisierten NFC- und/oder Bluetooth-Protokollen ist es überdies möglich, ein Smartphone mit einer entsprechenden App mit dem Frachtübergabemodul zu pairen und dieses dann zu Fernsteuerung zu verwenden, so dass die Zahl der notwendigen Komponenten weiter verringert werden kann. Loses Gepäck und containerartige Behälter können somit in sicherer Entfernung vom Vorfeld aufgenommen, über die Fördereinrichtung hin zum Frachtübergabemodul gefördert und dort ausgerichtet werden. Anschließend kann die Fracht weiter auf die den Frachtraumboden abdeckende Zwischenfördereinrichtung gegeben werden, vermittels welcher sie dann an ihren endgültigen Lagerplatz gebracht werden kann.

Vermittels der Ausgangselemente kann Fracht vom Frachtraum, vorzugsweise der dort angeordneten Zwischenfördereinrichtung aufgenommen und zur Basiseinheit weitergefördert werden, wobei die zugeführte Fracht dort vermittels der Transporteinrichtungen ausgerichtet und an die Eingangselemente weitergeleitet werden kann, und anschließend vermittels der Eingangselemente über den Eingangsbereich des Frachtraums an die außerhalb des Frachtraums angeordnete Fördereinrichtung förderbar ist.

Dies erlaubt analog ein vereinfachtes und beschleunigtes Be- und Entladen mit all den vorstehend angeführten Vorteilen.

Die im Frachtraum angeordnete Zwischenfördereinrichtung kann eine Rollenplatte, ein den Boden dass Frachtraums flächig abdeckendes, motorgetriebenes Förderband oder eine Kombination derselben sein.

Aufgrund der Verwendung einer derartigen Zwischenfördereinrichtung, wie sie beispielsweise unter der Bezeichnung sliding carpet^{©} von derselben Anmelderin angeboten wird, ist es nicht mehr länger notwendig, dass Arbeiter zum Verladen der Fracht, insbesondere der losen Fracht wie Koffer etc. im Frachtraum knien. Vielmehr kann das Gepäck - vorzugsweise zumindest teilweise automatisch - vom Frachtübergabemodul ausgerichtet und auf der Zwischenfördereinrichtung abgelegt werden, die das Gepäck dann, beispielsweise kontinuierlich oder taktweise, tiefer in den Frachtraum fährt. Hierdurch kann Personal und Zeit eingespart werden, was mithin zu einer spürbaren Reduzierung der Standzeiten und Kosten führt.

An der, beispielsweise in Sandwichbauweise und/oder wabenförmig ausgebildeten Tragstruktur und/oder dem Hüllenelement des containerartigen Behälters kann zumindest ein Halteelement ausgebildet sein, vermittels dem die Tragstruktur und das Hüllenelement miteinander verbunden sind. Ferner kann die Tragstruktur im nicht beladenen Zustand, d.h. ohne Gepäck und Hüllenelement, stapelbar sein.

Hierdurch ist es möglich, das Hüllenelement und die Tragstruktur schnell und einfach, ggf. sogar mit nur einer Hand sicher zu verbinden. Beispielsweise kann ein riemenartiges Halteelement durch eine entsprechende Schlaufe geführt werden oder die Verbindung kann mittels Klettverschluß hergestellt werden. Je nach Anwendung des containerartigen Behälters und Ausgestaltung des dabei verwendeten Hüllenelements sind mehr oder weniger derartige Halteelemente vorgesehen, die aus unterschiedlichsten Kombinationen von Befestigungsmitteln wie Riemen, Ösen, Haken, Klettbändern, Clips etc. bestehen können. Zudem können leere Behälter platzsparend gestapelt und in vorgegebenen Losgrößen transportiert bzw. am Einsatzort vorgehalten werden

Das Hüllenelement kann aus zumindest zwei Teilen bestehen, die mittels eines Verbindungselements miteinander verbunden sind. Das Hüllenelement kann die Tragstruktur in einem zwischen dem Bodenteil und den Seitenelementen aufgespannten, wandlosen Bereich, umgeben, um den von der Tragstruktur und dem Hüllenelement umfassten Raum auszubilden. Je nach Einsatzgebiet können unterschiedliche Material ein für das Hüllenelement verwendet werden. So kann das Hüllenelement beispielsweise aus einem wasserdichten, reißfesten und/oder feuerbeständigen Gewebe, einem Netz, einem papier-, karton- und/oder kunststoffartigen Material bestehen.

Durch die Verwendung eines zweiteiligen Hüllenelements ist es dabei vorteilhaft möglich, einen teilfertigen Container, der an der Unterseite, der Rückseite, den beiden Außenseiten sowie der Oberseite bereits von "Wänden" umschlossen ist, zu beladen und dann nur noch das frei, für die Beladung genutzte Ende zu verschließen.

Somit kann beispielsweise in großen Lagerhallen oder Flughäfen für die jeweiligen Verladestellen eine vorher festgelegt Anzahl an vorbereiteten Containern bereitgestellt werden, die dann beladen werden und anschließend, beispielsweise während der Weitergabe zu einer anderen Station, verschlossen werden. Durch die Verwendung eines verschluß-, schnellverbinder- oder clipartigen Verbindungselements ist es zudem möglich, die beiden Teile des Hüllenelements schnell und einfach miteinander zu verbinden.

Der containerartige Behälter kann ferner zumindest eine Auslösevorrichtung aufweisen, die zwischen der Tragstruktur und dem Hüllenelement oder zwischen den zwei Teilen des Hüllenelements angeordnet ist und derart ausgestaltet ist, dass sie bei Überschreiten des im Voraus definierten Grenzwerts der auf die Tragstruktur und/oder das Hüllenelement wirkenden Kraft öffnet und die Verbindung zwischen der Tragstruktur und dem Hüllenelement oder die Verbindung zwischen den zumindest zwei Teilen des Hüllenelements löst. Die Auslösevorrichtung kann dabei in dem Haltelement oder in dem Verbindungselement ausgebildet sein.

Das Vorsehen einer derartigen Auslösevorrichtung stellt sicher, dass die Verbindung zwischen Tragstruktur und dem Hüllenelement oder die Verbindung zwischen den beiden Teilen des Hüllenelements zuverlässig aufbricht, wenn der zulässige Grenzwert überschritten wird, so dass der von diesen umschlossenen Raum freigegeben wird und das Gepäck frei und ungehindert aus dem Behälter fallen kann. Wenn die Auslösevorrichtung in dem Haltelement ausgebildet ist, kann bei Überschreiten des zulässigen Grenzwerts die Verbindung zwischen dem Hüllenelement und der Tragstruktur zuverlässig geöffnet werden. Bei der Ausbildung der Auslösevorrichtung in dem Verbindungselement, mit dem die zumindest zwei Teile des Hüllenelements verbunden werden, ist es zudem vorteilhaft möglich, dass bei Überschreiten des zulässigen Grenzwerts der auf die Tragstruktur und/oder das Hüllenelement wirkenden Kraft der Teil des Hüllenelements, der von dem drückenden Gepäck mit Gewicht beaufschlagt wird, vom containerartigen Behälter in Richtung der vom Gepäck aufgebrachten Kraft ausklappt und das Gepäck hierauf, wie auf einem Teppich, zum Liegen kommt.

Da das erfindungsgemäße Frachtmanagementsystem zusätzlich die die Boden des Frachtraums abdeckende Zwischenfördereinrichtung aufweist, mit der loses Gepäck sowie der containerartige Behälter in das Frachtrauminnere verfrachtet wird, kann das aus dem Container freigegebene Gepäck, das auf dem vom Hüllenelement gebildeten "Teppich" liegt, vermittels der Zwischenfördereinrichtung "gesammelt" bewegt werden, so dass selbst nach dem Freigeben des Gepäcks aus dem Container, beispielsweise aufgrund von Turbulenzen während des Fluges, eine Zeitersparnis bei Be- und Entladen möglich bleibt.

Der containerartige Behälter kann Pufferelemente, die obere Ränder der Seitenelemente des containerartigen Behälters in Breitenrichtung der Tragstruktur umschließen, und zumindest eine Querstrebe umfassen, die derart an oberen Rändern der Seitenelemente in Breitenrichtung der Tragstruktur verlaufend angeordnet ist, dass die Querstrebe die Seitenelemente miteinander verbindet, wobei das Hüllenelement derart mit der Tragstruktur verbindbar ist, dass das Hüllenelement über die Querstrebe verlaufend von dieser unterstützt ist, so dass die Tragstruktur und das damit verbundene Hüllenelement zusammen einen vollständig umschlossenen Raum definieren.

Durch die Verwendung von Pufferelementen, beispielsweise aus geschäumten Kunststoff oder dergleichen, kann eine Beschädigung des Hüllenelements durch die Kanten der Tragstruktur verhindert werden. Überdies kann das Hüllenelement durch das Vorsehen zumindest einer Querstrebe, welche quer über die Tragstruktur verlaufend die Seitenelemente miteinander verbindet, von unten unterstützt werden, wodurch ggf. einzelne Gepäckstücke, die beispielsweise erst beim Boarding auf dem Vorfeld abgegeben werden, noch auf die bereits verschlossenen Behälter gelegt werden können.

Das Bodenteil und/oder die Seitenelemente der Tragstruktur des containerartigen Behälters können derart ausgestaltet sein, dass sie ausgelaufene Flüssigkeiten in dem Raum aufnehmen und zurückhalten können, vorzugsweise in einer Menge von einigen Millilitern bis wenigen Litern, insbesondere drei Litern.

Indem das Bodenteil und/oder die Seitenelemente der Tragstruktur zumindest kleinere Flüssigkeitsmengen aufnehmen können, ist es möglich, im Frachtraum auslaufende Flüssigkeiten wie beispielsweise Getränke, Kosmetiklösungen etc. aufzunehmen, wodurch eine Reinigung des Frachtraums vermieden oder zumindest verkürzt werden kann. Da die Flüssigkeiten vom Container aufgenommen und darin zurückgehalten werden können, kann zudem eine spätere Verschmutzung des Gepäcks, das nicht unmittelbar mit den Flüssigkeiten in Kontakt gelangt, vermieden werden, beispielsweise beim Entladen aus dem Frachtraum. Durch die Ausbildung des Bodenteils und/oder der Seitenelemente der Tragstruktur derart, dass diese Flüssigkeiten aufnehmen und zurückhalten können, ist es zudem möglich, zu verhindern, dass durch auslaufende korrosive Flüssigkeiten die Frachtraumstruktur beschädigt wird.

Der containerartige Behälter kann zudem Griffelemente aufweisen, die am Bodenteil und/oder den Seitenelementen der Tragstruktur angebracht sind und ein manuelles Ausrichten des containerartigen Behälters ermöglichen. Beispielsweise können Zugseile, Griffschlaufen oder Handgriffe vorgesehen sein, vermittels welcher der Container an die gewünschte Stelle gezogen oder geschoben und dort ausgerichtet werden kann.

In der Tragstruktur und/oder dem Hüllenelement können Mittel ausgebildet sein, vermittels der eine visuelle und/oder elektronische Überprüfung und Zuordnung der Vorrichtung, vorzugsweise per Nahfeldkommunikation, möglich ist. Dies erlaubt eine rasche Feststellung des Inhalts sowie des Ziels des containerartigen Behälters.

Das mobile Objekt kann erfindungsgemäß ein Narrowbody-Flugzeug sein und der im Voraus definierte Grenzwert der auf die Tragstruktur und/oder das Hüllenelement des containerartige Behälters wirkenden Kraft kann kleiner sein als eine maximal zulässige, in jede Richtung wirkende Last, die in dem Frachtraum des Narrowbody-Flugzeugs aufgenommen werden kann, und insbesondere 300 N nicht übersteigt.

Der containerartige Behälter ist derart ausgelegt, dass der im Voraus definierte Grenzwert für die auf die Tragstruktur und/oder das Hüllenelement wirkende Kraft kleiner ist als eine maximal zulässige, in jede Richtung wirkende Last, die dem Frachtraum des Narrowbody-Flugzeugs aufgenommen werden kann. In empirischen Versuchen wurde festgestellt, dass dies ein Wert ist, der im Bereich von 200 N bis 400 N liegt. Unter Berücksichtigung der vorstehend genannten Zertifizierungsstandards ist der containerartige Behälter daher derart ausgelegt, dass der im Voraus definierte Grenzwert 300 N nicht übersteigt, wodurch sichergestellt ist, dass die von dem containerartigen Behälter partiell aufgebrachte Flächenlast unter einer zulässigen Gesamtbeladung, in vorbestimmten Belastungsszenarien des Flugbetriebs, die lokal zugewiesene sicherheitsrelevante Maximalbelastung der flugzeugseitigen Konstruktion nicht überschreitet.

In anderen Worten: mit dem im erfindungsgemäßen Frachtmanagementsystem zur Anwendung kommenden, containerartigen Behälter zum Aufnehmen von losem Stückgut wie Taschen, Koffern, Paketen und dergleichen kann bei allen denkbaren Flugszenarien gewährleistet werden kann, dass durch den gewählten Wert einerseits ein ungewolltes Aufbrechen des Containers verhindert werden kann, während der Wert gleichzeitig so bemessen ist, dass eine Beschädigung der Frachtraumstruktur in jedem Fall verhindert wird.

Der containerartige Behälter kann zur Lagerung von darin aufgenommenen losem Stückgut in einem Frachtraum des Narrowbody-Flugzeugs dienen und das Bodenteil und die mit dem Bodenteil verbundenen Seitenelemente können derart ausgestaltet sein, dass sie der Kontur des Frachtraumquerschnitts folgen. Dies erlaubt eine maximale Ausnutzung der verfügbaren Fläche im Frachtraum.

Das Frachtübergabemodul, die Zwischenfördereinrichtung und/oder der containerartige Behälter können zumindest teilweise aus einem Faserverstärkten Kunststoff wie einem Glasfaser-Verbundwerkstoff, einem Kohlefaser-Verbundwerkstoff, Kevlar oder Kombinationen hiervon ausgebildet sind. Hierdurch kann das Gewicht der im Frachtraum befindlichen Module des erfindungsgemäßen Frachtmanagementsystems deutlich verringert werden, wodurch umgekehrt die Nutzlast erhöht werden kann.

Erfindungsgemäß wird somit eine Möglichkeit angeboten, um insbesondere auch bei Narrowbody-Flugzeugen das Be- und Entladen von Frachtgut in Form von Paletten, Containern und losem Stückgut wie Taschen, Koffern, Paketen und dergleichen, zu beschleunigen und zu erleichtern, ohne dabei die Sicherheit des zu beladenden Transportmittels oder des damit beschäftigten Personals zu gefährden.

### KURZE BESCHREIBUNG DER ZEICHNUNG

Die Merkmale und Vorteile sowie die technische und wirtschaftliche Bedeutung beispielhafter Ausführungsformen der Erfindung werden nachfolgend Bezug nehmend auf die beigefügte Zeichnung beschrieben; hierbei zeigt:
- Fig. 1: eine schematische Ansicht eines erfindungsgemäßen Frachtmanagementsystems zum Be- und Entladen eines Frachtraums eines mobilen Objekts mit Frachtgut; und
- Fig. 2: eine schematische Darstellung einer Ausführungsform eines containerartigen Behälters, die in den Teilansichten 1 bis 4 zeigt, wie das aufgenommene Stückgut bei Überschreiten des Grenzwerts der auf die Tragstruktur und/oder das Hüllenelement des containerartigen Behälters wirkenden Kraft freigegeben wird.

### BESCHREIBUNG VON AUSFÜHRUNGSFORMEN

Nachfolgend wird eine Ausführungsform des erfindungsgemäßen Frachtmanagementsystems zum Be- und Entladen eines Frachtraums eines mobilen Objekts mit Frachtgut Bezug nehmend auf die Figuren beschrieben.

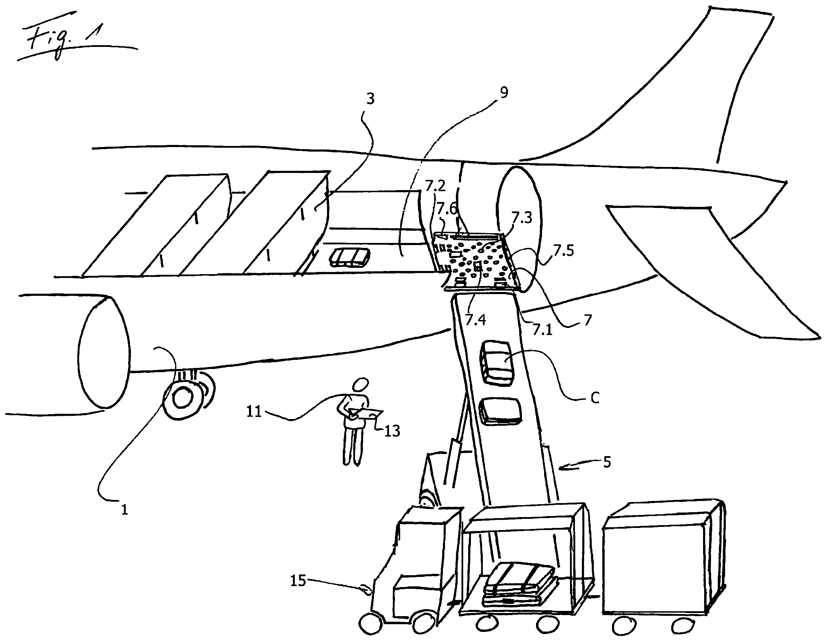

Fig. 1 zeigt schematische eine Ausführungsform eines erfindungsgemäßen Frachtmanagementsystems zum Be- und Entladen eines Frachtraums eines mobilen Objekts 1 mit Frachtgut.

In der hier gezeigten Ausführungsform findet das erfindungsgemäße Frachtmanagementsystem bei einem so genannten Narrowbody-Flugzeug Anwendung, das mit einem relativ niedrigen, meist nur etwas über einen Meter hohen Frachtraum unter den Sitzreihen ausgestaltet ist.

Wie hierbei schematisch in Fig. 1 gezeigt ist, befindet sich das Flugzeug 1 in seiner Parkposition auf dem Vorfeld.

Die (nicht dargestellte) Frachtraumluke ist geöffnet und über Vorfeldfahrzeuge 15 wird vom Check-In Schalter zugeführtes Gepäck C über eine Fördereinrichtung 5 (ein auf einem weiteren Vorfeldfahrzeug angeordnetes Förderband) in den Eingangsbereich des Frachtraums transportiert.

Dort gelangt es auf ein im Eingangsbereich installiertes Frachtübergabemodul 7, über welches das lose Gepäck C sowie anderes Frachtgut, beispielsweise containerartige Behälter 3, weiter in den Frachtraum förderbar ist. Die containerartigen Behälter 3 sind dabei derart ausgebildet, dass sie eine gesammelte Aufnahme und Weitergabe des Gepäcks ermöglichen, andererseits jedoch bei Überschreiten eines Grenzwerts, der auf die Tragstruktur 3.1 der Behälter und/oder das damit verbundene Hüllenelement 3.2 wirkenden Kraft aufbrechen und das darin gesammelt aufgenommene, lose Gepäck C wieder freigeben.

Das Frachtübergabemodul 7 hat im Bereich der Frachtraumöffnung als Eingangselemente 7.1 bezeichnete Rollen oder Walzen, welche die mit dem Förderband des Vorfeldfahrzeugs zugeführte Fracht aufnehmen und weiter auf eine Transportfläche führen, auf der kugelartige Transporteinrichtungen 7.3 ausgebildet sind.

Insbesondere bei der Handhabung containerartiger Behälter 3 oder dergleichen können in dem Frachtübergabemodul 7 vorgesehene Antriebseinheiten 7.4, die im unbenutzten Zustand in der Transportfläche versenkt sind, angehoben werden.

An den Antriebseinheiten 7.4 ausgebildete, motorgetriebene Rollen können dann kraftunterstützend die Behälter 3 und dergleichen auf die Transportoberfläche ziehen, wo das Frachtgut dann ausgerichtet werden kann.

Zur Weitergabe des Frachtguts in den Frachtraum sind weitere, vorzugsweise um 90 Grad versetzt angeordnete, Antriebseinheiten 7.4 sowie als Ausgangselemente 7.2 bezeichnete Rollen oder Walzen vorgesehen, welche, nach der Ausrichtung der Fracht über die Transportrollen 7.3, selbige motorunterstützt weiter in den Frachtraum führen.

Um zu vermeiden, dass beim Be- und/oder Entladen Fracht über die Transportfläche des Frachtübergabemoduls 7 hinaus befördert wird, dabei mithin die Struktur des Frachtraums beschädigt wird, sind Führungselemente 7.5 und 7.6 an dem Frachtübergabemodul 7 angeordnet, welche den Bewegungsweg der Fracht einschränken.

Zum Weitertransport des vom Frachtübergabemodul 7 übergebenen Frachtguts weiter in den Frachtraum hinein ist eine Zwischenfördereinrichtung 9 vorgesehen.

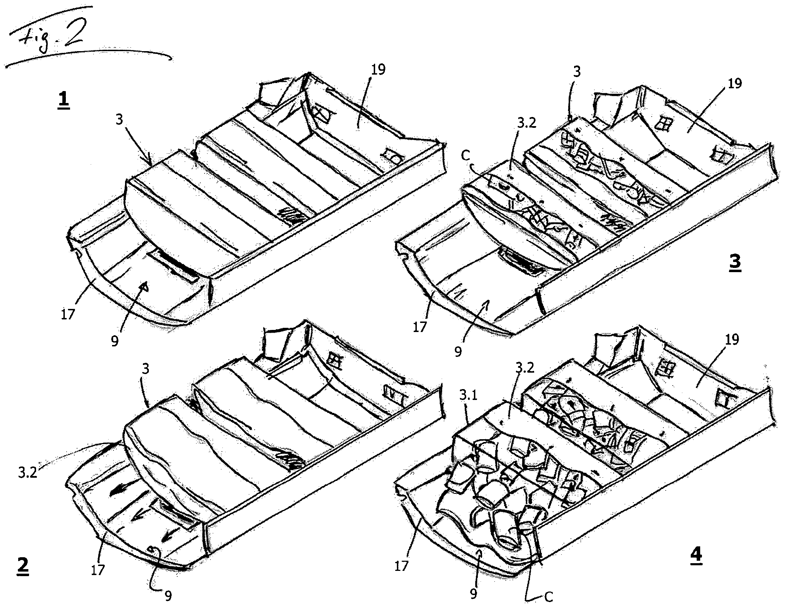

Die Zwischenfördereinrichtung 9 in dieser Ausführungsform umfasst ein Förderband, das den Boden des Frachtraums sowie Teile der Frachtraumseitenwände flächig abdeckt, mithin der Kontur des Frachtraums folgt, wie insbesondere in Fig. 2 gezeigt ist.

Das Förderband der Zwischenfördereinrichtung 9, die von derselben Anmelderin unter der Bezeichnung sliding carpet^{©} eingesetzt wird, wird von Führungselementen gelagert und verstärkt, die entlang des Frachtraumbodens - in Längsrichtung des Frachtraums verlaufend - angeordnet sind, wobei das Förderband oberhalb und unterhalb dieser Führungselemente verläuft. Zur Gewichtseinsparung sind die Führungselemente sowie die Aufnahmestücke 17 im Bereich des Frachtübergabemoduls 7 und das in Richtung zum Cockpit weisende Kopfende 19 der Zwischenfördereinrichtung 9 aus einem Faserverbundwerkstoff gefertigt.

An dem in Richtung zum Cockpit weisenden Kopfende 19 der Zwischenfördereinrichtung 9, das im Wesentlichen als senkrecht vom Förderband in Richtung zur Frachtraumdecke gerichtete Wand ausgebildet ist, liegt das verladene Gepäck an.

Insbesondere werden das Gepäck, d.h. das lose Stückgut C in Form von Koffern und dergleichen, sowie die containerartigen Behälter 3 nach erfolgter Ausrichtung über die kugelartigen Transporteinrichtungen 7.3 vermittels der Ausgangselemente 7.2 auf die Zwischenfördereinrichtung 9 ausgegeben, die das Gepäck dann weiter in das Frachtrauminnere führt.

Um möglichst Stauraum ungenutzt zu lassen, mithin den Freiraum zwischen dem zu verladenden Gepäck zu minimieren, kann das aus losem Stückgut C und containerartigen Behältern 3 bestehende Frachtgut bei der Weitergabe vom Frachtübergabemodul 7 auf die Zwischenfördereinrichtung 9 durch die Ausgangselemente 7.2 beschleunigt werden, so dass das Frachtgut eng aneinander auf dem Förderband der Zwischenfördereinrichtung 9 zu stehen kommt.

Um das mit dem Be- und Entladen betraute Personal zu entlasten, sind in dem Führungselement 7.5 auf der zum Flugzeugheck weisenden Seite des Frachtübergabemoduls 7 Bedien- bzw. Steuerelemente ausgebildet, die von einer Schutzwand geschützt sind, die von einem Teil des Führungselements 7.5 selbst gebildet ist, der den Transporteinrichtungen 7.3 zugewandt ist.

Vermittels dieser Steuerelemente kann eine Steuereinheit bedient werden, die in dem Frachtübergabemodul 7 vorgesehen ist, um zumindest die Eingangs- und Ausgangselemente 7.1, 7.2, die Transporteinrichtungen 7.3, die Antriebseinheiten 7.4 sowie die Zwischenfördereinrichtung 9 und, in einer besonders bevorzugten Ausführungsform, die außerhalb des Frachtraums befindliche Fördereinrichtung 5 sowie ggf. weitere Einrichtungen integral zu steuern.

Beim Be- und Entladen ist bei einer hier nicht dargestellten Ausführungsform des erfindungsgemäßen Frachtmanagementsystems nur ein einziger Arbeiter im Bereich des Frachtraumeingangs zugegen, der im Heckbereich des Flugzeugs hinter dem Frachtübergabemodul 7 sitzt oder kniet und vermittels der in dem Führungselement 7.5 ausgebildeten Steuerelemente im Frachtübergabemodul 7 die außerhalb des Flugzeugs stehende Fördereinrichtung 5, das Frachtübergabemodul 7 sowie die Zwischenfördereinrichtung 9 integral steuert. Hierbei ist es aufgrund des erfindungsgemäßen Frachtmanagementsystems nicht nötig, dass der Arbeiter das Frachtgut noch selbst hebt und dergleichen. Vielmehr steuert der Arbeiter mittels der Steuerelemente die einzelnen Module des Frachtmanagementsystems, wobei das Be- und Entladen somit weitestgehend automatisiert abläuft.

Dies ermöglicht insbesondere eine zeitoptimierte, integrierte Steuerung, vermittels welcher die Fracht kontinuierlich oder taktweise vom Vorfeld in den Frachtraum und aus diesem wieder heraus auf das Vorfeld gefördert werden kann.

Bei der in Fig. 1 gezeigten, besonders bevorzugten Ausführungsform des erfindungsgemäßen Frachtmanagementsystems, ist es zudem erstmals möglich, vollkommen auf einen Arbeiter im Frachtraum zu verzichten.

Stattdessen befindet sich der Arbeiter 11 in sicherer Entfernung vom Eingangsbereich des Frachtraums auf dem Vorfeld und hält eine Kontrolleinheit 13 in Händen, die in der hier dargestellten Ausführungsform kabellos mit der im Frachtübergabemodul 7 vorgesehenen Steuereinheit kommuniziert.

Die hier dargestellte Kontrolleinheit 13 ist dabei derart ausgestaltet, dass sie auf Kameras oder Sensoren an den jeweiligen Modulen des Frachtmanagementsystems Zugriff hat, und somit insbesondere für den Arbeiter 11 unmittelbar erkennbar ist, wenn es beim Be- oder Entladen der Fracht im Frachtraum zu Schwierigkeiten kommt, beispielsweise weil sperrige Koffer oder Taschen nicht richtig ausgerichtet werden konnten.

In einer besonders einfach ausgeführten Variante ist die Kontrolleinheit 13 kein spezifisch ausgebildetes Element wie eine Steuerkonsole oder dergleichen sondern ein Notebook, ein Tablet-PC oder auch einfach nur ein Smartphone, auf dem eine App ausgeführt wird, die eine integrale Steuerung des Frachtmanagementsystems ermöglicht.

In einer alternativen, hier nicht gezeigten Ausführungsform kann der Arbeiter 11 mit der Kontrolleinheit 13 auch im Bereich des Bodenfahrzeugs 5, beispielsweise auf einer an diesem vorgesehenen Plattform stehen, und somit unmittelbar einen Blick in den Frachtraum werfen, um sofort eingreifen zu können, sofern dies notwendig wird. Hierbei kann die Kontrolleinheit 13 dann beispielsweise mit einem längenveränderlichen Spiralkabel mit dem Frachtübergabemodul 7 verbunden sein, um die Eingabe von Steuerbefehlen zu ermöglichen.

Wie einleitend beschrieben ist, sind die containerartigen Behälter 3 derart ausgestaltet, dass sie einerseits eine gesammelte Aufnahme und Weitergabe des Gepäcks ermöglichen, andererseits jedoch bei Überschreiten eines Grenzwerts, der auf die Tragstruktur 3.1 der containerartigen Behälter 3 und/oder das damit verbundene Hüllenelement 3.2 wirkenden Kraft aufbrechen und das darin gesammelt aufgenommene, lose Gepäck C wieder freigeben.

Hierdurch kann ein Überschreiten der maximal zulässigen Flächenlast im Frachtraum vermieden werden, so dass trotz der Tatsache, dass in den meisten Narrowbody-Flugzeugen keine gemäß den Vorgaben der Technical Standards Order (TSO) C90c der FAA oder der ETSO C90c der EASA zertifizierten Standardcontainer zur Anwendung kommen können, da diesem Flugzeugtyp das erforderliche Transportsystem für Paletten und Flugzeugcontainer mit den entsprechenden Verriegelungsvorrichtungen im Frachtraum fehlt, vermittels welcher derartige ULDs gegen Bewegung gesichert werden könnten, das Gepäck dennoch in containerartigen Behältern 3 gesammelt transportiert werden kann.

Das vorstehend angesprochene Prinzip eines kollabierenden Behälters (zur Abgrenzung gegenüber herkömmlicher ULDs auch als Collapsible Load Device, kurz CLD, bezeichnet) ist schematisch in Fig. 2 angedeutet, die in den Ansichten 1 bis 4 zeigt, wie sich der containerartige Behälter 3 bei Überschreiten eines im Voraus definierten Grenzwerts einer auf die Tragstruktur 3.1 und/oder das Hüllenelement 3.2 wirkenden Kraft öffnet und seinen Inhalt - also das darin aufgenommene lose Stückgut C in Form von Koffern, Taschen etc. - über den Frachtraumboden verteilend freigibt.

Ansicht 1 aus Fig. 2 zeigt eine Mehrzahl von containerartigen Behältern 3, die hintereinander in einem Frachtraum des Flugzeugs 1 aufgenommen sind. Die containerartigen Behältern 3 stehen dabei ohne zusätzliche Sicherung auf der den Frachtraumboden abdeckenden Zwischenfördereinrichtung 9 und werden von dieser automatisch weiter in den Frachtraum hinein gefördert. In diesem Zustand wirkt außer dem Eigengewicht und dem Gewicht der aufgenommenen Gepäckstücke "keine" Kraft auf die containerartigen Behälter 3.

Ansicht 2 zeigt, wie das in den containerartigen Behältern 3 aufgenommene Gepäck gegen die Vorderseite des Hüllenelements 3.2 drückt und diese in Richtung der Pfeile ausbaucht, beispielsweise weil die containerartigen Behälter 3 während dem Start und der Landung oder während des Flugs, z.B. aufgrund von auftretenden Turbulenzen, aufgrund der bei diesem Flugzeugtyp zwangsläufig fehlenden Verriegelungsvorrichtungen ins Rutschen kommen.

Die rutschenden containerartigen Behälter 3 können sich dabei beispielsweise an der Seitenwand des Frachtraums oder den Oberkanten der Zwischenfördereinrichtung 9 verfangen, wodurch die rutschenden Behälter 3 abrupt abgebremst werden und zum Stehen kommen.

Das in dem Behälter 3 verstaute Gepäck bewegt sich jedoch aufgrund der Massenträgheit weiter, wodurch eine Kraft auf die Tragstruktur 3.1 und/oder das Hüllenelement 3.2 aufgebracht wird, die in die ursprüngliche Bewegungsrichtung wirkt.

Wenn die von dem Gepäck - den Koffern, Taschen, etc. - auf die containerartigen Behälter 3 aufgebrachte Kraft (Trägheitskraft F_{T}) sowie die aufgrund des abrupten Stopps der rutschenden containerartigen Behältern 3 erzeugte, gegen die Trägheitskraft wirkende Kraft (Reaktionskraft F_{R}) einen im Voraus definierten Grenzwert für die maximal zulässige, auf die Tragstruktur 3.1. und/oder das Hüllenelement 3.2. wirkende Kraft (zulässige Gesamtkraft F_{G}) übersteigt, bricht der containerartige Behälter 3 auf, da die in den containerartigen Behältern 3 vorgesehene Auslösevorrichtung in diesem Fall die Verbindung der beiden Hälften des Hüllenelements 3.2 zueinander freigibt, wodurch die beiden Teile des Hüllenelements 3.2, wie in Ansicht 3 gezeigt, voneinander gelöst werden.

Als Grenzwert wird hierbei ein Wert angenommen, der sich zusammensetzt aus:
- der Reaktionskraft (F_{R}), die erzeugt wird, wenn ein ungesichert ins Rutschen geratener containerartiger Behälter 3 abrupt gestoppt wird, beispielsweise weil er an den Wänden des Frachtraums oder anderem im Frachtraum verstautem Frachtgut hängenbleibt, und dadurch zum Stehen gebracht wird
- und der Trägheitskraft (F_{T}) des in dem containerartigen Behälter 3 verstauten Gepäcks C, das sich aufgrund der Massenträgheit zunächst weiter in die Richtung bewegt, in welche der containerartige Behälter 3 gerutscht ist, und dadurch eine Kraft auf die Tragstruktur 3.1 und/oder das Hüllenelement 3.2 aufbringt, die in die ursprüngliche Bewegungsrichtung wirkt.

Diese Trägheitskraft F_{T} wirkt dann, zusammen mit der beim abrupten Abbremsen des containerartige Behälters 3 erzeugten, gegen die Trägheitskraft F_{T} wirkenden Reaktionskraft F_{R} auf den containerartige Behälter 3 ein, wodurch eine Gesamtkraft (F_{G}) auf den containerartigen Behälter 3 aufgebracht wird.

Wenn diese Gesamtkraft F_{G} den vorher definierten Grenzwert für die maximal zulässige, auf die Tragstruktur 3.1 und/oder das Hüllenelement 3.2 wirkende Kraft überschreitet, "bricht" somit der containerartige Behälter 3 auf, wodurch der von der Tragstruktur 3.1 und dem Hüllenelement 3.2 umfasste Raum freigeben wird und damit eine relative Beweglichkeit des in dem Raum aufgenommenen Stückguts C zueinander sowie zu dem containerartigen Behälter 3 und der diesen umgebenden Umgebung möglich wird.

In empirischen Versuchen wurde der Grenzwert der maximal zulässigen Kraft als ein Wert von etwa 400 N ermittelt und ist gemäß der hier diskutierten Ausführungsform, unter Wahrung der Zertifizierungsstandards für Narrowbody-Flugzeuge und einer ausreichenden Sicherheitsspanne, derart bestimmt, dass er 300 N nicht übersteigt.

Wenn die Auslösevorrichtung bei Überschreiten des Grenzwerts der maximal zulässigen Kraft die Verbindung zwischen den beiden Hälften des Hüllenelements 3.2 öffnet, wird also der durch das Hüllenelement 3.2 und die Tragstruktur 3.1 umschlossene Raum freigegeben und das darin gehaltene Gepäck C fällt aus den containerartigen Behältern 3 in den Frachtraum und verteilt sich dort auf der Zwischenfördereinrichtung 9, wie in Ansicht 4 gezeigt.

Da die Zwischenfördereinrichtung 9 bei dem erfindungsgemäßen Frachtmanagementsystem über ein von einem Motor angetriebenes Förderband verfügt, das im Wesentlichen den gesamten Boden des Frachtraums abdeckt, kann das nun nicht mehr gebündelt im containerartigen Behälter 3 befindliche Gepäck C, das stattdessen lose auf dem Förderband verteilt ist, beim Entladen dennoch in kurzer Zeit dank der Zwischenfördereinrichtung 9 zum Frachtübergabemodul 7 gefördert und von dort, nach erfolgter Ausrichtung, über die Fördereinrichtung 5 schnell und weitestgehend ohne das Zutun von Bodenpersonal an wartende Transportfahrzeuge 15 und dergleichen übergeben werden.

Obgleich das Frachtmanagementsystem zum Be- und Entladen eines Frachtraums mit Frachtgut vorstehend am Beispiel eines Narrowbody-Flugzeugs beschrieben wurde, ist das Frachtmanagementsystem in gleicher Weise für andere mobile Objekte anwendbar, die über einen entsprechend ausgebildeten Frachtraum verfügen.

Beispielsweise kann das Frachtmanagementsystem zum Be- und Entladen eines Frachtraums mit Frachtgut bei einem LKW, einem Schiff, einem Güterzug etc. zur Anwendung kommen, in denen verschiedenartiges Frachtgut transportiert werden soll und für den Be- und Entladevorgang möglichst wenig Standzeit gewünscht ist. Aufgrund der besonderen Anforderungen jedoch kommt das Frachtmanagementsystem zum Be- und Entladen eines Frachtraums mit Frachtgut vorzugsweise bei Narrowbody-Flugzeugen zum Einsatz und erlaubt eine Modernisierung des Be- und Entladevorgangs dergestalt, dass Standzeiten und Kosten minimiert werden können, während gleichzeitig die Menge des verstauten Frachtguts zumindest beibehalten werden kann.

Erfindungsgemäß wird somit ein Frachtmanagementsystem zum Be- und Entladen eines Frachtraums eines mobilen Objekts (1) mit Frachtgut (C) nach Anspruch 1 vorgeschlagen, wobei loses Stückgut einzeln oder gesammelt in einem containerartigen Behälter (3) vorliegen kann. Das Frachtmanagementsystem besteht aus einer Fördereinrichtung (5), die außerhalb des Frachtraums angeordnet ist, einem im Eingangsbereich des Frachtraums des mobilen Objekts (1) angeordneten Frachtübergabemodul (7), und einer Zwischenfördereinrichtung (9), die im Anschluss an das Frachtübergabemodul (7) im Frachtraum angeordnet ist.

### BEZUGSZEICHENLISTE

- 1: mobiles Objekt (Narrowbody-Flugzeug)
- 3: containerartiger Behälter
- 3.1: Tragstruktur
- 3.2: Hüllenelement
- 5: Fördereinrichtung (Bodenfahrzeug)
- 7: Frachtübergabemodul
- 7.1: Eingangselemente
- 7.2: Ausgangselemente
- 7.3: Transporteinrichtungen
- 7.4: Antriebseinheit
- 7.5: Führungselement
- 7.6: Führungselement
- 9: Zwischenfördereinrichtung (Sliding Carpet)
- 11: Arbeiter
- 13: Kontrolleinheit
- 15: Gepäcktransporter
- 17: Aufnahmestück
- 19: Kopfende
- C: loses Stückgut

## Patentansprüche

1. Frachtmanagementsystem zum Be- und Entladen eines Frachtraums eines mobilen Objekts (1) mit Frachtgut in Form von Paletten, Containern und losem Stückgut (C) wie Taschen, Koffern, Paketen und dergleichen, wobei das lose Stückgut einzeln oder gesammelt in einem containerartigen Behälter (3) vorliegen kann, wobei das Frachtmanagementsystem aufweist:
ein mobiles Objekt (1) mit einem Frachtraum:
eine Fördereinrichtung (5), die bei der Verwendung außerhalb des Frachtraums des mobilen Objekts (1) angeordnet ist, und das Frachtgut in Richtung zu einem Eingangsbereich des Frachtraums des mobilen Objekts (1) fördert;
ein im Eingangsbereich des Frachtraums des mobilen Objekts (1) angeordnetes Frachtübergabemodul (7), das die zugeführte Fracht annimmt und weiter in den Frachtraum leitet, wobei die Fracht vor der Weiterleitung in den Frachtraum auf dem Frachtübergabemodul (7) ausrichtbar ist; und
zumindest eine Zwischenfördereinrichtung (9), die im Anschluss an das Frachtübergabemodul (7) im Frachtraum angeordnet ist, zur Weiterförderung des Frachtguts im Frachtraum; und
optional einen containerartigen Behälter (3);
wobei das Frachtübergabemodul (7) aufweist:
eine Basiseinheit, die in dem Eingangsbereich eines Frachtraums anordenbar ist und die vier Randbereiche umfasst, die zwischen sich eine Transportfläche aufspannen,
zumindest zwei Eingangselemente (7.1), die in einem ersten Randbereich der vier Randbereiche der Basiseinheit angeordnet sind und vermittels welcher die Fracht im Eingangsbereich des Frachtraums aufnehmbar und zur Basiseinheit weiterförderbar ist,
zumindest zwei Ausgangselemente (7.2), die in einem zweiten Randbereich der vier Randbereiche der Basiseinheit, vorzugsweise um 90° zu dem ersten Randbereich versetzt, angeordnet sind und vermittels welcher die Fracht von der Basiseinheit weiter in den Frachtraum förderbar ist,
eine Mehrzahl von Transporteinrichtungen (7.3), die über die Transportfläche an der Oberseite der Basiseinheit verteilt integral in dieser angeordnet sind und vermittels welcher die über die Eingangselemente (7.1) zugeführte Fracht ausgerichtet und an die Ausgangselemente (7.2) weitergeleitet werden kann, sowie
Führungselemente (7.5, 7.6), die in einem dritten und vierten Randbereich der vier Randbereiche der Basiseinheit angeordnet sind, um zu verhindern, dass die Fracht beim Zuführen auf die Transportfläche (F) über die Transportfläche (F) hinaus bewegt wird,
wobei in der Transportfläche der Basiseinheit zumindest zwei in unterschiedliche Richtungen weisende Antriebseinheiten (7.4), vorzugsweise um 90° zueinander versetzt, angeordnet sind, die rollen- oder walzenartige Förderelemente aufweisen, die von einem integral in der Basiseinheit angeordneten Motor antreibbar sind, wobei die Antriebseinheiten (7.4) in der Transportfläche der Basiseinheit versenkt angeordnet sind und zur Weitergabe der Fracht mittels einer Hebeeinrichtung derart angehoben werden können, dass die Förderelemente aus der Transportfläche der Basiseinheit herausragen, um die Fracht durch Motorkraft von den Eingangselementen (7.1) zu übernehmen, auf die Transportfläche der Basiseinheit weiter zu fördern und von dort, nach Ausrichtung der Fracht vermittels der Transporteinrichtungen (7.3), vorzugsweise beschleunigt, über die Ausgangselemente (7.2) weiter in den Frachtraum, vorzugsweise an die dort angeordnete Zwischenfördereinrichtung (9), auszugeben,
wobei der containerartige Behälter (3) aufweist:
eine Tragstruktur (3.1) mit einem Bodenteil sowie zwei daran angeordneten, einander gegenüberliegenden Seitenelementen,
ein Hüllenelement (3.2), das derart mit der Tragstruktur (3.1) verbindbar ist, dass die Tragstruktur (3.1) und das damit verbundene Hüllenelement (3.2) zwischen sich einen an zumindest fünf Seiten umschlossenen Raum definieren, zur Aufnahme des losen Stückguts (C) darin
wobei die Tragstruktur (3.1) und/oder das Hüllenelement (3.2) derart ausgestaltet sind, dass die Tragstruktur (3.1) und/oder das Hüllenelement (3.2) bei Überschreiten eines im Voraus definierten Grenzwerts einer auf die Tragstruktur (3.1) und/oder das Hüllenelement (3.2) wirkenden Kraft, den von diesen umfassten Raum freigeben und damit eine relative Beweglichkeit des in dem Raum aufgenommenen Stückguts (C) zueinander sowie zu dem containerartigen Behälter (3) und einer diesen umgebenden Umgebung ermöglichen, die gleich der Beweglichkeit von Stückgut ist, das nicht in dem containerartigen Behälter (3) aufgenommen ist,
**dadurch gekennzeichnet, dass**
die in der Basiseinheit integral angeordneten Motoren sowie die Hebeeinrichtung mittels einer Steuereinheit ansteuerbar sind, die integral in der Basiseinheit angeordnet ist und kabelgebunden und/oder kabellos mit einer im Frachtraum vorgesehenen Einrichtung in Verbindung bringbar ist, wobei
zumindest eines (7.6) der in dem dritten und vierten Randbereich der vier Randbereiche der Basiseinheit angeordneten Führungselemente (7.5, 7.6) Steuerelemente aufweist, die in Ausnehmungen angeordnet sind, die in dem Führungselement (7.5) ausgebildet sind, und von einer Schutzwand geschützt sind, die von einem Teil des Führungselements (7.5) gebildet ist, der den Transporteinrichtungen (7.3) zugewandt ist,
wobei die Steuereinheit vermittels der Steuerelemente bedient werden kann, um die Eingangs- und Ausgangselemente (7.1, 7.2), die Transporteinrichtungen (7.3), die Antriebseinheiten (7.4) sowie weitere, im Frachtraum vorhandene, Einrichtungen wie beispielsweise die Zwischenfördereinrichtung (9) integral zu steuern.

2. Frachtmanagementsystem nach Anspruch 1, wobei:
die außerhalb des Frachtraums angeordnete Fördereinrichtung (5) ein Förderfahrzeug oder ein längenveränderliches Förderband ist.

3. Frachtmanagementsystem nach Anspruch 1 oder 2, wobei:
die Eingangselemente (7.1) im ersten Randbereich rollen- oder walzenartig ausgebildet sind,
die Ausgangselemente (7.2) im zweiten Randbereich rollen- oder walzenartig ausgebildet sind, und
die Transporteinrichtungen (7.3), die über die Transportfläche der Basiseinheit verteilt angeordnet sind, rollen- oder kugelartig ausgebildet sind und an der Transportfläche weitere Transportmittel in Form von Schienen angeordnet sind.

4. Frachtmanagementsystem nach Anspruch 1, wobei
die Eingangselemente (7.1), die Ausgangselemente (7.2) und/oder die Transporteinrichtungen (7.3) derart ausgestaltet sind, dass sie eine manuelle und/oder mit Motorkraft unterstützte, vorzugsweise automatische, Aufnahme, Ausrichtung und Weitergabe der Fracht ermöglichen.

5. Frachtmanagementsystem nach einem der Ansprüche 1 bis 4, wobei
die Steuereinheit vermittels einer Steuereinheit ansteuerbar ist, die, vorzugsweise abnehmbar, im Frachtraum angeordnet ist, und/oder von einem Arbeiter mitgeführt wird, um Anweisungen kabelgebunden und/oder kabellos, vorzugsweise von außerhalb des Frachtraums, an die Steuereinheit zu geben.

6. Frachtmanagementsystem nach einem der Ansprüche 1 bis 5, wobei
vermittels der Ausgangselemente (7.2) Fracht vom Frachtraum, vorzugsweise der dort angeordneten Zwischenfördereinrichtung (9) aufnehmbar und zur Basiseinheit weiterförderbar ist, die zugeführte Fracht dort vermittels der Transporteinrichtungen (7.3) ausgerichtet und an die Eingangselemente (7.1) weitergeleitet werden kann, und die Fracht anschließend vermittels der Eingangselemente (7.1) über den Eingangsbereich des Frachtraums an die außerhalb des Frachtraums angeordnete Fördereinrichtung (5) förderbar ist.

7. Frachtmanagementsystem nach einem der Ansprüche 1 bis 6, wobei
die im Frachtraum angeordnete Zwischenfördereinrichtung (9) eine Rollenplatte, ein den Boden des Frachtraums flächig abdeckendes, motorgetriebenes Förderband oder eine Kombination derselben ist.

8. Frachtmanagementsystem nach einem der Ansprüche 1 bis 7, wobei
an der Tragstruktur (3.1) und/oder dem Hüllenelement (3.2) des containerartigen Behälters (3) zumindest ein Halteelement ausgebildet ist, vermittels dem die Tragstruktur (3.1) und das Hüllenelement (3.2) miteinander verbunden sind,
das Hüllenelement (3.2) aus zumindest zwei Teilen besteht, die mittels eines Verbindungselements miteinander verbunden sind, und
das Hüllenelement (3.2) die Tragstruktur (3.1) in einem zwischen dem Bodenteil und den Seitenelementen aufgespannten, wandlosen Bereich, umgibt, zur Ausbildung des von der Tragstruktur (3.1) und dem Hüllenelement (3.2) umfassten Raumes.

9. Frachtmanagementsystem nach einem der Ansprüche 1 bis 8, weiter aufweisend zumindest eine Auslösevorrichtung, die zwischen der Tragstruktur (3.1) und dem Hüllenelement (3.2) oder zwischen den zwei Teilen des Hüllenelements (3.2) angeordnet ist und derart ausgestaltet ist, dass sie bei Überschreiten des im Voraus definierten Grenzwerts der auf die Tragstruktur (3.1) und/oder das Hüllenelement (3.2) wirkenden Kraft öffnet und die Verbindung zwischen der Tragstruktur (3.1) und dem Hüllenelement (3.2) oder die Verbindung zwischen den zumindest zwei Teilen des Hüllenelements (3.2) löst, wobei die Auslösevorrichtung in dem Haltelement oder in dem Verbindungselement ausgebildet ist.

10. Frachtmanagementsystem nach einem der Ansprüche 1 bis 9, weiter aufweisend Pufferelemente, die obere Ränder der Seitenelemente des containerartigen Behälters (3) in Breitenrichtung der Tragstruktur (3.1) umschließen, und Griffelemente, die am Bodenteil und/oder den Seitenelementen der Tragstruktur (3.1) des containerartigen Behälters (3) angebracht sind und ein manuelles Ausrichten des containerartigen Behälters (3) ermöglichen.

11. Frachtmanagementsystem nach einem der Ansprüche 1 bis 10, weiter aufweisend zumindest eine Querstrebe, die derart an oberen Rändern der Seitenelemente in Breitenrichtung der Tragstruktur (3.1) verlaufend angeordnet ist, dass die Querstrebe die Seitenelemente miteinander verbindet, wobei das Hüllenelement (3.2) derart mit der Tragstruktur (3.1) verbindbar ist, dass das Hüllenelement (3.2) über die Querstrebe verlaufend von dieser unterstützt ist, so dass die Tragstruktur (3.1) und das damit verbundene Hüllenelement (3.2) zusammen einen vollständig umschlossenen Raum definieren.

12. Frachtmanagementsystem nach einem der Ansprüche 1 bis 11, wobei
das Bodenteil und/oder die Seitenelemente der Tragstruktur (3.1) des containerartigen Behälters (3) derart ausgestaltet sind, dass sie ausgelaufene Flüssigkeiten in dem Raum aufnehmen und zurückhalten können, vorzugsweise in einer Menge von einigen Millilitern bis wenigen Litern, insbesondere drei Litern.

13. Frachtmanagementsystem nach einem der Ansprüche 1 bis 12, wobei
die Tragstruktur (3.1) vorzugsweise stapelbar ist und an der Tragstruktur (3.1) und/oder dem Hüllenelement (3.2) Mittel ausgebildet sind, vermittels der eine visuelle und/oder elektronische Überprüfung und Zuordnung der Vorrichtung, vorzugsweise per Nahfeldkommunikation, möglich ist.

14. Frachtmanagementsystem nach einem der Ansprüche 1 bis 13, wobei das mobile Objekt (1) ein Narrowbody-Flugzeug ist und der im Voraus definierte Grenzwert der auf die Tragstruktur (3.1) und/oder das Hüllenelement (3.2) wirkenden Kraft kleiner ist als eine maximal zulässige, in jede Richtung wirkende Last, die in dem Frachtraum des Narrowbody-Flugzeugs aufgenommen werden kann, und insbesondere 300 N nicht übersteigt, und wobei
der containerartige Behälter (3) zur Lagerung von darin aufgenommenen losem Stückgut (C) in einem Frachtraum des Narrowbody-Flugzeugs dient und das Bodenteil und die mit dem Bodenteil verbundenen Seitenelemente vorzugsweise derart ausgestaltet sind, dass sie der Kontur des Frachtraumquerschnitts folgen.

15. Frachtmanagementsystem nach einem der Ansprüche 1 bis 14, wobei
das Frachtübergabemodul (7), die Zwischenfördereinrichtung (9) und/oder der containerartige Behälter (3) zumindest teilweise aus einem Faserverstärkten Kunststoff wie einem Glasfaser-Verbundwerkstoff, einem Kohlefaser-Verbundwerkstoff, Kevlar oder Kombinationen hiervon ausgebildet sind.

## Claims

1. Cargo management system for loading and unloading cargo into and out of a cargo area of a mobile object (1), the cargo being in the form of pallets, containers and loose piece items (C) such as bags, suitcases, packages and the like, it being possible for the loose piece items to be present individually or gathered together in a container-like receptacle (3), the cargo management system comprising:
a mobile object (1) having a cargo area;
a conveying device (5), which is arranged outside the cargo area of the mobile object (1) and conveys the cargo to an entrance region of the cargo area of the mobile object (1);
a cargo handover module (7) arranged in the entrance region of the cargo area of the mobile object (1), the cargo handover module (7) accepting the supplied cargo and passing it on into the cargo area, the cargo being orientatable on the cargo handover module (7) before being passed on into the cargo area; and
at least one intermediate conveying device (9), arranged downstream from the cargo handover module (7) in the cargo area, for conveying the cargo onwards within the cargo area; and,
optionally, a container-like receptacle (3);
wherein the cargo handover module (7) comprises:
a base unit, which can be arranged in the entrance region of a cargo area and comprises four edge regions which span a transport area between them,
at least two input elements (7.1), which are arranged in a first edge region of the four edge regions of the base unit and by means of which the cargo can be received in the entrance region of the cargo area and conveyed onwards to the base unit,
at least two output elements (7.2), which are arranged in a second edge region of the four regions of the base unit, preferably offset through 90° from the first edge region, and by means of which the cargo can be conveyed onwards from the base unit into the cargo area,
a plurality of transport devices (7.3), which are arranged integrally in the base unit, distributed over the transport area on the upper face of said unit, and by means of which the cargo supplied via the input elements (7.1) can be orientated and passed on to the output elements (7.2), and
guide elements (7.5, 7.6), which are arranged in a third and fourth edge region of the four edge regions of the base unit so as to prevent the cargo from moving out over the transport area (F) when being supplied to the transport area (F),
wherein, in the transport area of the base unit, at least two drive units (7.4) facing in different directions are arranged, preferably offset through 90° with respect to one another, which have roller-like conveyor elements which are driveable by a motor arranged integrally in the base unit, the drive units (7.4) being arranged sunk into the transport area of the base unit and being able to be lifted again by a lifting device to pass on the cargo, in such a way that the conveying elements protrude from the transport area of the base unit so as to take over the cargo from the input elements (7.1) by motor power, convey it onwards onto the transport area of the base unit, and from there, after the cargo is orientated by means of the transport devices (7.3), to output it into the cargo space, preferably to the intermediate conveying device (9) arranged therein, via the output elements (7.2), preferably in an accelerated manner,
wherein the container-like receptacle (3) comprises:
a support structure (3.1) comprising a base part and two side elements arranged thereon and positioned opposite one another, and
a shell element (3.2), which is connectable to the support structure (3.1) in such a way that the support structure (3.1) and the shell element (3.2) connected thereto define between them a space, enclosed on at least five sides, for receiving the loose piece items (C),
the support structure (3.1) and/or the shell element (3.2) being configured in such a way that, if a limit defined in advance on a force acting on the support structure (3.1) and/or the shell element (3.2) is exceeded, the support structure (3.1) and/or the shell element (3.2) release the space enclosed thereby, and thus enable relative mobility of the piece items (C) received in the space, with respect to one another and to the container-like receptacle (3) and an environment surrounding it, which is equal to the mobility of piece items which are not received in the container-like receptacle (3),
**characterized in that**
the motors, arranged integrally in the base unit, and the lifting device are actuable by means of a control unit, which is arranged integrally in the base unit and can be connected in a wired or wireless manner to a device provided in the cargo area
at least one (7.6) of the guide elements (7.5, 7.6) arranged in the third and fourth edge region of the four edge regions of the base unit has control elements, which are arranged in recesses formed in the guide element (7.5) and which are protected by a protective wall formed by a part of the guide element (7.5) facing the transport devices (7.3), and
the control unit being operable by means of the control elements so as integrally to control the input and output elements (7.1, 7.2), the transport devices (7.3), the drive units (7.4) and further devices present in the cargo area such as the intermediate conveying device (9).

2. Cargo management system according to claim 1, wherein:
the conveying device (5) arranged outside the cargo area is a conveying vehicle or a variable-length conveyor belt.

3. Cargo management system according to either claim 1 or claim 2, wherein:
the input elements (7.1) in the first edge region are formed in the manner of rollers or drums,
the output elements (7.2) in the second edge region are formed in the manner of rollers or drums,
the transport devices (7.3) which are arranged distributed over the transport area of the base unit are formed in the manner or rollers or balls, and further transport means in the form of rails are arranged on the transport area.

4. Cargo management system according to claim 1, wherein:
the input elements (7.1), the output elements (7.2) and/or the transport devices (7.3) are configured in such a way that they allow the cargo to be received, orientated and passed on manually and/or with the assistance of motor power.

5. Cargo management system according to any of claims 1 to 4, wherein:
the control unit is actuable by means of a control unit, which is arranged preferably removably in the cargo area and/or carried by an operator so as to give instructions to the control unit in a wired and/or wireless manner, preferably from outside the cargo area.

6. Cargo management system according to any of claims 1 to 5, wherein:
by means of the output elements (7.2), cargo can be received from the cargo area, preferably the intermediate conveying device (9) arranged therein, and conveyed onwards to the base unit, it being possible for the supplied cargo to be orientated there by means of the transport device (7.3) and passed on to the input elements (7.1), and subsequently to be conveyed via the entrance region of the cargo area to the conveyor device (5) arranged outside the cargo area by means of the input elements (7.1).

7. Cargo management system according to any of claims 1 to 6, wherein:
the intermediate conveying device (9) arranged in the cargo area is a roller plate, a motor-driven conveyor belt covering the floor of the cargo area in a planar manner, or a combination thereof.

8. Cargo management system according to any of claims 1 to 7, wherein:
at the support structure (3.1) and/or the shell element (3.2) of the container-like receptacle (3), at least one holding element is formed, by means of which the support structure (3.1) and the shell element (3.2) are interconnected,
the shell element (3.2) consists of at least two parts, which are interconnected by means of a connecting element, and
the shell element (3.2) encloses the support structure (3.1) in a wall-free region spanned between the base part and the side elements, so as to form the space enclosed by the support structure (3.1) and the shell element (3.2).

9. Cargo management system according to any of claims 1 to 8, further comprising at least one release device, which is arranged between the support structure (3.1) and the shell element (3.2) or between the two parts of the shell element (3.2) and is configured in such a way that it opens if the limit defined in advance on the force acting on the support structure (3.1) and/or the shell element (3.2) is exceeded, and releases the connection between the support structure (3.1) and the shell element (3.2) or the connection between the at least two parts of the shell element (3.2), the release device being formed in the holding element or in the connecting element.

10. Cargo management system according to any of claims 1 to 19, further comprising buffer elements, which enclose upper edges of the side elements of the container-like receptacle (3) in the width direction of the support structure (3.1), and
handle elements which are attached to the base part and/or the side elements of the support structure (3.1) of the container-like receptacle (3) and make manual orientation of the container-like receptacle (3) possible.

11. Cargo management system according to any of claims 1 to 10, further comprising at least one transverse strut, which is arranged extending in the width direction of the support structure (3.1) on upper edges of the side elements in such a way that the transverse strut interconnects the side elements, the shell element (3.2) being connectable to the support structure (3.1) in such a way that the shell element (3.2) extends over the transverse strut so as to be supported by said strut, in such a way that the support structure (3.1) and the shell element (3.2) connected thereto together define a completely enclosed space.

12. Cargo management system according to any of claims 1 to 11, wherein:
the base part and/or the side elements of the support structure (3.1) of the container-like receptacle (3) are configured in such a way that they can receive and retain escaped liquids in the space, preferably in an amount of several millilitres to a few litres, in particular three litres.

13. Cargo management system according to any of claims 1 to 12, wherein:
the support structure (3.1) is preferably stackable and in the support structure (3.1) and/or the shell element (3.2), means are formed by means of which visual and/or electronic checking and assignment of the device, preferably by near-field communication, are possible.

14. Cargo management system according to any of claims 1 to 13, wherein:
the mobile object (1) is a narrow-body aircraft, and the limit defined in advance on the force acting on the support structure (3.1) and/or the shell element (3.2) of the container-like receptacle is less than a maximum admissible load, acting in any direction, which can be received in the cargo area of the narrow-body aircraft, and in particular does not exceed 300 N, and wherein
the container-like receptacle (3) may be used for storing loose piece items (C) received therein in a cargo area of the narrow-body aircraft, and the base part and the side elements connected to the base part may be configured in such a way that they follow the contour of the cargo area cross section.

15. Cargo management system according to any of claims 1 to 14, wherein:
the cargo handover module (7), the intermediate conveying device (9) and/or the container-like receptacle (3) are formed at least in part from a fibre-reinforced plastics material such as a glass-fibre composite material, a carbon-fibre composite material, Kevlar, or combinations thereof.

## Revendications

1. Système de gestion de marchandises pour le chargement et le déchargement d'une soute d'un objet mobile (1) avec des marchandises sous forme de palettes, de conteneurs et de marchandises en vrac (C) telles que sacs, valises, colis et analogues, où les marchandises en vrac peuvent être présentes individuellement ou rassemblées dans un récipient en forme de conteneur (3), où le système de gestion de marchandises présente:
un objet mobile (1) avec une soute;
un dispositif de transport (5), qui est disposé à l'extérieur de la soute de l'objet mobile (1), et qui transporte les marchandises en direction d'une zone d'entrée de la soute de l'objet mobile (1);
un module de transfert de marchandises (7) disposé dans la zone d'entrée de la soute de l'objet mobile (1), qui reçoit les marchandises apportées et les conduit plus loin dans la soute, où les marchandises peuvent être orientées sur le module de transfert de marchandises (7) avant d'être conduites plus loin dans la soute; et
au moins un dispositif de transport intermédiaire (9), qui est disposé dans la soute à la suite du module de transfert de marchandises (7), pour transporter plus loin les marchandises dans la soute ; et
éventuellement un récipient en forme de conteneur (3);
où le module de transfert de marchandises (7) présente:
une unité de base qui peut être disposée dans la zone d'entrée d'une soute et qui comprend quatre zones de bord qui tendent entre elles une surface de transport,
au moins deux éléments d'entrée (7.1), qui sont disposés dans une première zone de bord des quatre zones de bord de l'unité de base et au moyen desquels les marchandises peuvent être reçues dans la zone d'entrée de la soute et peuvent être transportées plus loin jusqu'à l'unité de base,
au moins deux éléments de sortie (7.2), qui sont disposés dans une deuxième zone de bord des quatre zones de bord de l'unité de base, décalée de préférence de 90° par rapport à la première zone de bord, et au moyen desquels les marchandises peuvent être transportées de l'unité de base plus loin dans la soute,
une pluralité de dispositifs de transport (7.3), qui sont disposés répartis sur la surface de transport sur le côté supérieur de l'unité de base de manière intégrée dans celle-ci et au moyen desquels les marchandises apportées par le biais des éléments d'entrée (7.1) peuvent être orientées et transmises aux éléments de sortie (7.2),
ainsi que
des éléments de guidage (7.5, 7.6) qui sont disposés dans une troisième et quatrième zone de bord des quatre zones de bord de l'unité de base, pour empêcher que les marchandises soient déplacées à l'extérieur de la surface de transport (F) lors de l'apport sur la zone de transport (F),
où dans la surface de transport de l'unité de base sont disposées au moins deux unités d'entraînement (7.4) tournées dans des directions différentes, de préférence décalées de 90° l'une par rapport à l'autre, qui présentent des éléments de transport en forme de rouleaux ou de cylindres, qui peuvent être entraînés par un moteur disposé de manière intégrée dans l'unité de base, où les unités d'entraînement (7.4) sont disposées enfoncées dans la surface de transport de l'unité de base et peuvent être relevées pour la transmission des marchandises au moyen d'un dispositif de levage de telle manière que les éléments de transport dépassent de la surface de transport de l'unité de base pour recevoir les marchandises des éléments d'entrée (7.1) par une force de moteur, les transporter plus loin sur la surface de transport de l'unité de base et de là, après orientation des marchandises au moyen des dispositifs de transport (7.3), les délivrer, de préférence de manière accélérée, par le biais des éléments de sortie (7.2) plus loin dans la soute, de préférence au dispositif de transport intermédiaire (9) qui y est disposé,
où le récipient en forme de conteneur (3) présente:
une structure de support (3.1) avec une partie de fond et deux éléments latéraux opposés l'un à l'autre, disposés sur celle-ci,
un élément de couverture (3.2), qui peut être relié à la structure de support (3.1) de telle manière que la structure de support (3.1) et l'élément de couverture (3.2) relié à celle-ci définissent entre eux un espace clos sur au moins cinq côtés, pour la réception des marchandises en vrac (C) dans celui-ci
où la structure de support (3.1) et/ou l'élément de couverture (3.2) sont conçus de telle manière que la structure de support (3.1) et/ou l'élément de couverture (3.2), en cas de dépassement d'une valeur limite définie au préalable d'une force agissant sur la structure de support (3.1) et/ou l'élément de couverture (3.2), libèrent l'espace entouré par ceux-ci et permettent ainsi une mobilité relative des marchandises (C) reçues dans l'espace les unes par rapport aux autres et par rapport au récipient en forme de conteneur (3) et un environnement entourant celui-ci, qui est égale à la mobilité des marchandises qui ne sont pas reçues dans le récipient en forme de conteneur (3),
**caractérisé en ce que**
les moteurs disposés de manière intégrée dans l'unité de base ainsi que le dispositif de levage peuvent être commandés au moyen d'une unité de commande qui est disposée de manière intégrée dans l'unité de base et qui peut être mise en liaison par câble et/ou sans câble avec un dispositif prévu dans la soute, où
au moins l'un (7.6) des éléments de guidage (7.5, 7.6) disposés dans la troisième et la quatrième zone de bord des quatre zones de bord de l'unité de base présente des éléments de commande qui sont disposés dans des évidements qui sont formés dans l'élément de guidage (7.5), et qui sont protégés par une paroi de protection qui est formée par une partie de l'élément de guidage (7.5) qui est tournée vers les dispositifs de transport (7.3),
où l'unité de commande peut être actionnée au moyen des éléments de commande, pour commander de manière intégrée les éléments d'entrée et de sortie (7.1, 7.2), les dispositif de transport (7.3), les unités d'entraînement (7.4) ainsi que d'autres dispositifs présents dans la soute, comme par exemple le dispositif de transport intermédiaire (9).

2. Système de gestion de marchandises selon la revendication 1, où:
le dispositif de transport (5) disposé à l'extérieur de la soute est un véhicule de transport ou une bande transporteuse de longueur variable.

3. Système de gestion de marchandises selon la revendication 1 ou 2, où:
les éléments d'entrée (7.1) dans la première zone de bord sont conçus comme des rouleaux ou des cylindres,
les éléments de sortie (7.2) dans la deuxième zone de bord sont conçus comme des rouleaux ou des cylindres, et
les dispositifs de transport (7.3), qui sont disposés répartis sur la surface de transport de l'unité de base, sont conçus comme des rouleaux ou des sphères et d'autres moyens de transport sont disposés sous forme de rails sur la surface de transport.

4. Système de gestion de marchandises selon la revendication 1, où
les éléments d'entrée (7.1), les éléments de sortie (7.2) et/ou les dispositifs de transport (7.3) sont conçus de telle manière qu'ils permettent une réception, une orientation et une transmission des marchandises manuelle et/ou assistée par une force de moteur, de préférence automatique.

5. Système de gestion de marchandises selon l'une des revendications 1 à 4, où
l'unité de commande peut être commandée au moyen d'une unité de commande qui est disposée dans la soute, de préférence de manière détachable, et/ou apportée par un opérateur, pour communiquer à l'unité de commande des instructions, par câble et/ou sans câble, de préférence depuis l'extérieur de la soute.

6. Système de gestion de marchandises selon l'une des revendications 1 à 5, où
au moyen des éléments de sortie (7.2) les marchandises peuvent être prélevées de la soute, de préférence du dispositif de transport intermédiaire (9) qui y est disposé, et peuvent être transportées plus loin jusqu'à l'unité de base, les marchandises apportées peuvent être orientées dans celle-ci au moyen des dispositifs de transport (7.3) et peuvent être transmises aux éléments d'entrée (7.1), et les marchandises peuvent ensuite être transportées au moyen des éléments d'entrée (7.1) par l'intermédiaire de la zone d'entrée de la soute au dispositif de transport (5) disposé à l'extérieur de la soute.

7. Système de gestion de marchandises selon l'une des revendications 1 à 6, où
le dispositif de transport intermédiaire (9) disposé dans la soute est une plaque à rouleaux, une bande transporteuse entraînée par moteur qui recouvre le fond de la soute sur sa surface ou une combinaison de ceux-ci.

8. Système de gestion de marchandises selon l'une des revendications 1 à 7, où
sur la structure de support (3.1) et/ou l'élément de couverture (3.2) du récipient en forme de conteneur (3) est formé au moins un élément de maintien, au moyen duquel la structure de support (3.1) et l'élément de couverture (3.2) sont reliés l'un à l'autre,
l'élément de couverture (3.2) consiste en au moins deux parties qui sont reliées l'une à l'autre au moyen d'un élément de liaison, et
l'élément de couverture (3.2) entoure la structure de support (3.1) dans une zone sans parois tendue entre la partie de fond et les éléments latéraux, pour la formation de l'espace entouré par la structure de support (3.1) et l'élément de couverture (3.2).

9. Système de gestion de marchandises selon l'une des revendications 1 à 8, présentant en outre au moins un dispositif de déclenchement qui est disposé entre la structure de support (3.1) et l'élément de couverture (3.2) ou entre les deux parties de l'élément de couverture (3.2) et qui est conçu de telle manière qu'en cas de dépassement de la valeur limite définie au préalable de la force agissant sur la structure de support (3.1) et/ou l'élément de couverture (3.2) il s'ouvre et libère la liaison entre la structure de support (3.1) et l'élément de couverture (3.2) ou la liaison entre les au moins deux parties de l'élément de couverture (3.2), où le dispositif de déclenchement est formé dans l'élément de maintien ou dans l'élément de liaison.

10. Système de gestion de marchandises selon l'une des revendications 1 à 9, présentant en outre des éléments tampons, qui entourent des bords supérieurs des éléments latéraux du récipient en forme de conteneur (3) dans la direction de la largeur de la structure de support (3.1), et des éléments de poignée, qui sont disposés sur la partie de fond et/ou les éléments latéraux de la structure de support (3.1) du récipient en forme de conteneur (3) et permettent une orientation manuelle du récipient en forme de conteneur (3).

11. Système de gestion de marchandises selon l'une des revendications 1 à 10, présentant en outre au moins une entretoise, qui est disposée en s'étendant au niveau de bords supérieurs des éléments latéraux dans la direction de la largeur de la structure de support (3.1) de telle manière que l'entretoise relie les éléments latéraux entre eux, où l'élément de couverture (3.2) peut être relié à la structure de support (3.1) de telle manière que l'élément de couverture (3.2) en s'étendant au-dessus de l'entretoise est soutenu par celle-ci, de sorte que la structure de support (3.1) et l'élément de couverture (3.2) relié à celle-ci définissent ensemble un espace totalement clos.

12. Système de gestion de marchandises selon l'une des revendications 1 à 11, où
la partie de fond et/ou les éléments latéraux de la structure de support (3.1) du récipient en forme de conteneur (3) sont conçus de telle manière qu'ils peuvent recevoir et retenir dans l'espace des liquides écoulés, de préférence en une quantité de quelques millilitres à quelques litres, notamment trois litres.

13. Système de gestion de marchandises selon l'une des revendications 1 à 12, où
la structure de support (3.1) est de préférence empilable et sur la structure de support (3.1) et/ou l'élément de couverture (3.2) sont formés des moyens à l'aide desquels une vérification et affectation visuelle et/ou électronique du dispositif est possible, de préférence via une communication en champ proche.

14. Système de gestion de marchandises selon l'une des revendications 1 à 13, où
l'objet mobile (1) est un avion à fuselage étroit et la valeur limite définie au préalable de la force agissant sur la structure de support (3.1) et/ou l'élément de couverture (3.2) est inférieure à une charge maximale admissible, agissant dans chaque direction, qui peut être reçue dans la soute de l'avion à fuselage étroit, et en particulier n'excède pas 300 N, et où
le récipient en forme de conteneur (3) sert à stocker des marchandises en vrac (C) reçues à l'intérieur dans une soute de l'avion à fuselage étroit et la partie de fond et les éléments latéraux reliés à la partie de fond sont de préférence conçus de telle manière qu'ils suivent le contour de la section transversale de la soute.

15. Système de gestion de marchandises selon l'une des revendications 1 à 14, où
le module de transfert de marchandises (7), le dispositif de transport intermédiaire (9) et/ou le récipient en forme de conteneur (3) sont formés au moins partiellement d'une matière synthétique renforcée par des fibres comme un matériau composite à fibres de verre, un matériau composite à fibres de carbone, le Kevlar ou des combinaisons de ceux-ci.
